# EUROPEAN PATENT SPECIFICATION

(11) **EP 1 016 968 B1**
(45) Date of publication and mention of the grant of the patent: **11.09.2002**
(21) Application number: 00100479.5
(22) Date of filing: 12.10.1994
(51) Int. Cl.: G06F 11/16

(54) **Logic circuit having error detection function**
Logischer Schaltkreis mit Fehlernachweisfunktion
Circuit logique avec fonction de détection d'erreurs,

(30) Priority: 15.10.1993 JP 25801393; 25.02.1994 JP 2766494
(43) Date of publication of application: 05.07.2000
(62) Divisional of application: 94307483.1
(73) Proprietor: Hitachi, Ltd., Chiyoda-ku, Tokyo 101 (JP)
(72) Inventor: Kanekawa, Nobuyasu, Hitachi-shi, Ibaraki 316 (JP); Shoji, Suzuki, Hitachi-shi, Ibaraki 316 (JP); Sato, Yoshimichi, Hitachi-shi, Ibaraki 316 (JP); Tashiro, Korefumi, Hitachi-shi, Ibaraki 316-12 (JP); Keisuke,Bekki, Hitachi-shi, Ibaraki 316 (JP); Sato, Hiroshi, Katsuta-shi, Ibaraki 312 (JP); Nohmi, Makoto, Katsuta-shi, Ibaraki 312 (JP); Ohtsuji, Shinya, Hitachi-shi, Ibaraki 316 (JP)
(74) Representative: Calderbank, Thomas Roger

(56) References cited:
- DE-A- 4 233 569
- DE-B- 2 729 362
- DE-B- 2 813 079
- US-A- 5 231 640

## Description

The present invention relates to a redundant logical circuit or system that has function blocks provided with an identical function and at least dualized.

Also, the present invention relates to a fault tolerant computer system in which such circuits or systems are used.

Control systems for airplanes, trains, automobiles, and similar means of transportation are increasingly electrolysed as advanced control performances are needed to increase energy (fuel) efficiency, operationability, comfortability, and their speeds. To run the means of transportation safely, any of the control systems are forcefully required to be high in the reliability and the fail-safe performance that is no dangerous output is caused by occurrence of fault.

To assure the reliability and fail-safe performance of the control system, it is important the control system to have a capability of detecting the occurrence of fault, that is, a self-checking capability.

The effectiveness of conventional technology to achieve this is based on the presumption that the fault detected in either of the said at least dualized function blocks is independent of the other function block. In other words, it is premised that the same fault never occurs in both of at-least dualized function blocks at the same time. If the same fault occurs in both of the dualized function blocks at the same time, the fault output from both of the said dualized function blocks match and it becomes impossible to detect the fault by comparing them. This becomes a big problem when dualized function blocks are arranged in the same semi-conductor chip.

A fault that occurs in either of at-least dualized function blocks due to electric noise, etc. can be prevented from affecting the others even when they are designed in the same way, by delaying the timings of their operations individually. And to material such a time diversity, the clock or input signal that decides the timing of a dualized function block operation is entered only to one of the dualized function blocks through a delay circuit. When comparing the output signals from those function blocks, only the signal from the other function block can be output through the delay circuit to compare it with that of the former function block in the comparison circuit.

It is known from e.g. DE-B-2729362 to provide a redundant logical circuit with dualized function blocks, in which there is delay of signals. The present invention proposes a specific time delay which has been found advantageous.

Thus, according to the present invention there is provided a redundant logical circuit or system that has function blocks provided with an identical function and at least dualized, wherein the operations of the said at least dualized function blocks are delayed by a certain time of period (T delay); wherein said time of period corresponds to an odd multiple of the half-cycle of the clock.

Preferably, wherein the signal or clock to be entered to the first function block of the said at-least dualized function blocks is delayed by the said time of period (T delay), and the signal to be output from the second function block is delayed by the said time of period (T delay) and compared with the output from the first function block.

The circuit or system may be one in which an output is output externally only when all the outputs from the said function blocks match and stops the output or outputs an output to external to guarantee the safe side operation when the outputs from the said function blocks do not match.

The present invention may also provide a fault tolerant system with first and second circuits incorporating the redundant logical circuit defined above and a switching circuit that selects and outputs the output of either the said first circuit or the second circuit, wherein the said switching circuit selects the output according to the error detection signal from the said first or second logical circuit.

The above and other objects, features and advantages of the present invention will be apparent from the following detailed description of the preferred embodiments of the invention in conjunction with the accompanying drawings, in which:
Fig. 1 is an example of diversifying an operation time;
Fig. 2 is another example of diversifying an operation time;
Fig. 3 is still another example of diversifying and operation time.

These embodiments are especially intending to materialize self-checking logics stated in chapter 1.

Furthermore, by taking means called diversities as shown below, faults to be detected in any of at-least dualized function blocks can be prevented from affecting the other function block, improving the said effectiveness of the embodiments. The method to materialize such the diversities to be explained below can be combined with the self-checking comparison circuit 217 provided by Japanese Patent Laid-Open No. 27664/1994, to form a self-checking logical circuit or system. Of course, it can also be combined with other technologies to build a high reliability system such as a self-checking system, fault tolerant system, fail-safe system, etc.

Faults that occur due to electric noise, etc. in any of said at-least dualized function blocks can be prevented from affecting the other function block even when both of the function blocks are designed in the same way, by delaying the timings of their operations individually.

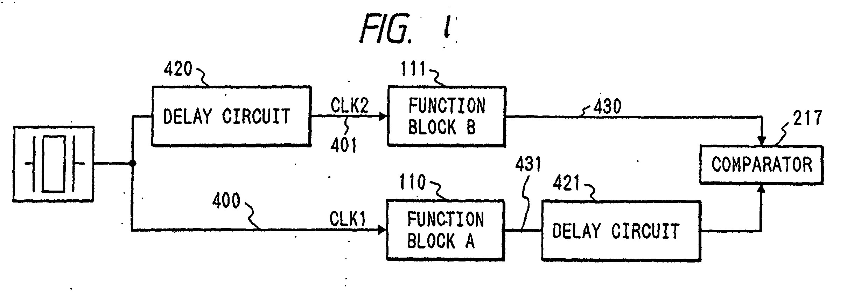

Figures 1, 2 and 3 show embodiments of a system to achieve such a time diversity.

In the embodiment shown in Figure 1, only the clock signal 401 is entered to one B111 of the dualized function blocks through the delay circuit 420 that is set a delay time (T delay) to delay the operation timing. In this case, the output 431 from the function block B111 is delayed by a certain time of period (T delay) from the output 430 from the function block A110. Thus, the output 430 from the function block A110 is delayed by a certain time (T delay) using the delay circuit 421 so that outputs 430 and 431 are compared in the comparison circuit 217. In this embodiment, since the function blocks A110 and B110 can be operated at different timings from each other, malfunctions to be caused by power noise, etc. can be prevented from occurring concurrently in both function blocks A110 and B110. This allows a perfect self-checking logic to be realized by dualizing a function block and comparing outputs from both of the at-least dualized function blocks.

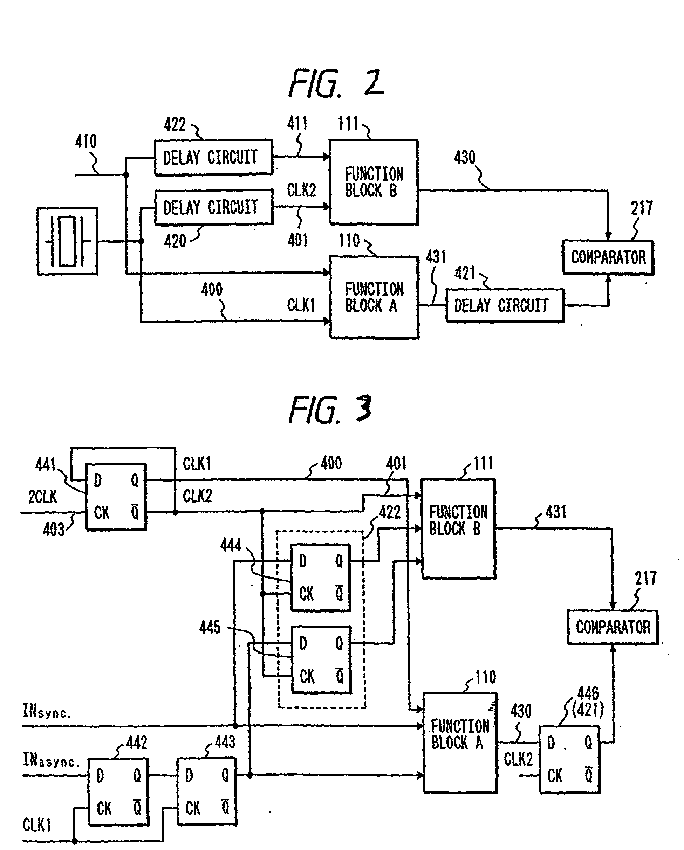

When there are signals 410 and 411 to be entered the dualized function blocks A110 and B111, only the signal 401 may be entered to the function block B111 through the delay circuit 422 that is set a delay time (T delay) as shown in Figure 2.

In this embodiment, any delay time (T delay) can be selected, but the delay time (T delay) should be as large as possible to minimize the correlation of faults between the function blocks A110 and B111. The speed up the operation and detection of faults, however, the delay time (T delay) should be as small as possible. In addition, to minimize the mutual influence of noise between the function blocks A110 and B111 considering that power noise in a digital circuit is generated in synchronization with clock signals, the delay time (T delay) should be set as follows.
T delay = N+1/2 [clock cycle]
N=0, 1...

To satisfy both items(influence by noise and operation speed) therefore, it is found that the most suitable delay time (T delay) is ½ [of the clock cycle].

Figure 3 shows an embodiment of this invention, in which the delay time (T delay) is set to ½ [of the clock cycle]. The original clock signal 403 that has a frequency double the clock signals 400 and 401 of the dualized function blocks A110 and B111 is divided in the flip-flop 441 to become clock signals 400 and 401 whose phases are shifted by 180°, that is, ½ [of the clock cycle], from each other. They are then entered to the function blocks A110 and B111 separately. Input signals Insync and Inasync are entered to the function block A110 without delay. They are then entered to the function block B111 after they are delayed by ½ {of the clock cycle] in the flip-flops 444 and 445 (equivalent to the delay circuit 422). The input signal Insync is synchronized with the clock signal 400. The input signal Inasync is not synchronized with the clock signal 400. In other words, it is an asynchronous input signal. The Inasync signal is synchronized with the clock signal 400 in the flip-flop circuits 442 and 443. The output 430 from the function block A110 is delayed by ½ [of the clock cycle] in the flip-flop circuit 446 (equivalent to the delay circuit 421) and compared with the output 431 from the function block B111 in the comparison circuit 217.

This invention provides a new method that assures the said fail-safe function even to cope with false signature to be caused by a short. No special constraint is needed to materialize failsafe logic circuits according to this invention. In addition, existing semi-conductor technologies, design automation tools, etc. can also be used effectively to reduce the cost and time of development significantly.

## Claims

1. A redundant logical circuit or system that has function blocks (110,111) provided with an identical function and
at least dualized, wherein the operations of the said at least dualized function blocks are delayed (420,421,422) by a certain time period (T delay);
**characterised in that**: said time period corresponds to an odd multiple of the half-cycle of the clock.

2. A redundant logical circuit or system according to Claim 1, wherein the signal or clock to be entered to the first function block (111) of the said at-least dualized function blocks is delayed (420) by the said time period (T delay), and the signal to be output from the second function block (110) is delayed (421) by the said time period (T delay) and compared (217) with the output from the first function block (111).

3. A redundant logical circuit or system according to any one of the preceding Claims which is a fail-safe logic circuit or system that outputs an output to external only when all the outputs from the said function blocks (110,111) match and stops the output or outputs an output to external to guarantee the safe side operation when the outputs from the said function blocks do not match.

4. A redundant logical circuit or system according to any one of Claims 1 to 3, with a fault detecting function for generating an error detection signal.

5. A fault tolerant system provided with the first and second circuits, comprising the redundant logical circuit according to Claim 4 and a switching circuit that selects and outputs the output of either the said first circuit or the second circuit, wherein the said switching circuit selects the output according to the error detection signal from the said first or second logical circuit.

## Patentansprüche

1. Redundante logische Schaltung oder redundantes logisches System mit Funktionsblöcken (110, 111), die mit einer identischen Funktion versehen und mindestens doppelt vorhanden sind, wobei die Operationen der mindestens doppelt vorhandenen Funktionsblöcke um eine gewisse Zeitspanne (Verzögerung T) verzögert sind (420, 421, 422),
**dadurch gekennzeichnet, daß** die Zeitspanne einem ungeraden Vielfachen des halben Taktzyklus entspricht.

2. Schaltung oder System nach Anspruch 1, wobei das in den ersten Funktionsblock (111) der mindestens vorhandenen Funktionsblöcke einzugebende Signal oder Taktsignal um die Zeitspanne (Verzögerung T) verzögert ist (420) und das von dem zweiten Funktionsblock (111) auszugebende Signal um die Zeitspanne (Verzögerung T) verzögert (421) und mit dem Ausgang des ersten Funktionsblocks (111) verglichen wird.

3. Schaltung oder System nach einem der vorhergehenden Ansprüche, wobei es sich um eine ausfallsichere logische Schaltung bzw. ein ausfallsicheres logisches System handelt, das ein Ausgangssignal nach außen nur dann abgibt, wenn sämtliche Ausgänge der Funktionsblöcke (110, 111) zueinander passen, und die Ausgabe anhält oder ein Ausgangssignal nach außen abgibt, um den ausfallsicheren Betrieb zu garantieren, wenn die Ausgangssignale der Funktionsblöcke nicht zueinander passen.

4. Schaltung oder System nach einem der Ansprüche 1 bis 3 mit einer Fehlererkennungsfunktion zur Erzeugung eines Fehlererkennungssignals.

5. Fehlertolerantes System, das mit der ersten und der zweiten Schaltung versehen ist und die redundante logische Schaltung nach Anspruch 4 sowie eine Schalterstufe aufweist, die das Ausgangssignal entweder der ersten oder der zweiten Schaltung auswählt und ausgibt, wobei die Schalterstufe das Ausgangssignal entsprechend dem Fehlererkennungssignal von der ersten oder der zweiten logischen Schaltung auswählt.

## Revendications

1. Circuit ou système logique redondant qui a des blocs fonctionnels (110, 111) munis d'une fonction identique et au moins doublés, dans lequel les fonctionnements desdits blocs fonctionnels au moins doublés sont retardés (420, 421, 422) d'une certaine période de temps (retard T),
**caractérisé en ce que** : ladite période de temps correspond à un multiple impair du demi-cycle de l'horloge.

2. Circuit ou système logique redondant selon la revendication 1, dans lequel le signal ou l'horloge qui doit être entré dans le premier bloc fonctionnel (111) parmi les blocs fonctionnels au moins doublés est retardé (420) de ladite période de temps (retard T), et le signal à délivrer en sortie depuis le second bloc fonctionnel (110) est retardé (421) de ladite période de temps (retard T) et comparé (217) à la sortie du premier bloc fonctionnel (111).

3. Circuit ou système logique redondant selon l'une quelconque des revendications précédentes, lequel est un circuit ou un système logique à sécurité intégrée qui délivre une sortie à l'extérieur uniquement lorsque toutes les sorties desdits blocs fonctionnels (110, 111) sont égales et interrompt la sortie ou délivre une sortie à l'extérieur pour garantir la sécurité côté fonctionnement lorsque les sorties provenant desdits blocs fonctionnels ne sont pas égales.

4. Circuit ou système logique redondant selon l'une quelconque des revendications 1 à 3, ayant une fonction de détection d'anomalie pour générer un signal de détection d'erreur.

5. Système à tolérance d'anomalie muni des premier et second circuits, comportant le circuit logique redondant selon la revendication 4 et un circuit de commutation qui sélectionne et délivre en sortie la sortie dudit premier circuit ou dudit second circuit, dans lequel ledit circuit de commutation sélectionne la sortie conformément au signal de détection d'erreur provenant dudit premier ou dudit second circuit logique.
